# EUROPÄISCHE PATENTSCHRIFT

(11) **EP 0 806 578 B1**
(45) Veröffentlichungstag und Bekanntmachung des Hinweises auf die Patenterteilung: **24.09.2003**
(21) Anmeldenummer: 97104456.5
(22) Anmeldetag: 15.03.1997
(51) Int. Cl.: F16C 13/00, F16L 27/08

(54) **Dichtkopf zum Transport eines Wärmeträgermediums zu einem rotierenden Drucksystem**
Sealing head for the transport of a heat carrier to a rotating pressure system
Pièce d'étanchéité pour le transfer d'un liquide caloporteur à un système rotatif de pression

(30) Priorität: 09.05.1996 DE 19618661
(43) Veröffentlichungstag der Anmeldung: 12.11.1997
(73) Patentinhaber: Christian Maier GmbH & Co. Maschinenfabrik, D-89520 Heidenheim (DE)
(72) Erfinder: Szam, Peter, 89547 Gerstetten (DE)
(74) Vertreter: Dziewior, Joachim, Dipl.-Phys. Dr.

(56) Entgegenhaltungen:
- EP-A- 0 448 730
- US-A- 1 953 525
- US-A- 4 965 920

## Beschreibung

Die Erfindung betrifft einen Dichtkopf zum Transport eines Wärmeträgermediums in Form von Dampf zu einem rotierenden Drucksystem, wie einer Trockentrommel, Heizwalze oder dergleichen, und anschließendem Abführen des Kondensats, bestehend aus einem an das Drucksystem angeschlossenen rohrförmigen Rotor und einem über Wälzlager auf dem Rotor angeordneten stillstehenden Dichtkopfgehäuse mit mindestens einem Anschlußstutzen für eine das Wärmeträgermedium führende Anschlußleitung, wobei der Rotor über den vom Wärmeträgermedium beaufschlagten Innenraum des Dichtkopfgehäuses in offener Verbindung mit dem Anschlußstutzen steht und axial zwischen dem Anschlußstutzen und den Wälzlagern ein den Rotor gegen die Wand des Dichtkopfgehäuses abdichtendes primäres Dichtungselement angeordnet ist, dem axial in Richtung zu den Wälzlagern hin eine zur Atmosphäre dichtende, sekundäre Dichtung zwischen dem Rotor und der Wand des Dichtkopfgehäuses nachgeschaltet ist, und im Dichtkopfgehäuse axial zwischen der sekundären Dichtung und dem primären Dichtungselement ein sich ringförmig um den Rotor erstreckender Raum angeordnet ist.

Dichtköpfe dieser Art bei Verwendung von flüssigen Wärmeträgermedien sind aus der Praxis bekannt. Das Wärmeträgermedium sorgt dabei für eine Schmierung im Bereich des primären Dichtungselements, so daß trotz der üblicherweise hohen Drehzahlen des Drucksystems und der hohen Temperaturen des Wärmeträgermediums der Verschleiß gering gehalten und somit die Dichtfunktion des Dichtungselements möglichst wenig beeinträchtigt wird.

Kommt als Wärmeträgermedium jedoch Dampf zur Anwendung, so ist die angestrebte Schmierwirkung nicht mehr gegeben. Dies gilt insbesondere auch für den aus der US 1 953 525 A bekannten, gattungsgleichen Dichtkopf. Dort wird das sich im Drucksystem bildende Kondensat unmittelbar über ein Röhrensystem abgeführt. Die EP 0 448 730 A offenbart einen gattungsähnlichen Dichtkopf, bei dem ein zwischen zwei Dichtungen liegender Raum mit einem Vorlagemedium beaufschlagt ist, das außerhalb des Dichtkopfgehäuses im Umlauf geführt und gekühlt ist. Als Vorlagemedium kann das Wärmeträgermedium selbst verwendet werden, wozu der Raum in wärmeleitendem Kontakt mit einem Kühlsystem steht.

Der Erfindung liegt die Aufgabe zugrunde, einen Dichtkopf der eingangs genannten Art so auszubilden, daß auch bei der Verwendung von Dampf als Wärmeträgermedium eine hinreichende Schmierwirkung im Bereich des primären Dichtungselements sichergestellt ist.

Diese Aufgabe wird nach der Erfindung dadurch gelöst, daß der Raum zwischen dem primären Dichtungselement und der sekundären Dichtung ein Kondensatraum ist, der in wärmeleitendem Kontakt mit einem Kühlsystem und der über wenigstens einen Überströmkanal mit dem vom Wärmeträgermedium beaufschlagten Innenraum in Verbindung steht.

Der durch die Erfindung erreichte Vorteil besteht im wesentlichen darin, daß unmittelbar aus dem als Wärmeträgermedium dienenden Dampf ein Kondensat gebildet wird, das von der dem Innenraum des Dichtkopfgehäuses abgewandten Seite her auf das primäre Dichtungselement einwirkt. Durch die direkte Verbindung zwischen dem Innenraum und dem Kondensatraum wird ein Druckgleichgewicht eingestellt, wodurch auf das primäre Dichtungselement keine einseitigen Kraftbeanspruchungen durch unterschiedliche Druckbelastung einwirken. Auf diese Weise ist trotz der Verwendung von Dampf als Wärmeträgermedium eine ausreichende Schmierung des im übrigen besonders beanspruchten primären Dichtungselementes sichergestellt.

In bevorzugter Ausführungsform sind das primäre Dichtungselement als Ringlippendichtung oder als Gleitringdichtung und die sekundäre Dichtung als Gleitringdichtung ausgebildet. Die Ringlippendichtung weist dabei zur Erhöhung der Dichtwirkung zweckmäßigerweise mehrere, axial hintereinander angeordnete Ringlippen auf.

Um einen unerwünschten Wärmetransport vom Innenraum des Dichtkopfgehäuses zum Kondensatraum hin zu verhindern, sieht die Erfindung vor, daß das primäre Dichtungselement auf seiner dem Innenraum zugewandten Seite von einer Isolierscheibe umschlossen ist. Das Dichtungselement ist dabei vorteilhafterweise in einen Ringfalz der Isolierscheibe eingelegt.

Um weiter einen unerwünschten Wärmetransport vom Rotor zu den Dichtungen bzw. zum Kondensatraum zu unterbinden, ist der Rotor in zweckmäßiger Ausgestaltung der Erfindung in dem sich über die beiden Dichtungen erstreckenden Bereich doppelwandig ausgebildet.

Um einerseits eine ausreichende Menge an Kondensat zum Dichtungselement hin zu befördern, andererseits eine hinreichende Kondensatbildung durch Abkühlung des Dampfes an der durch das Kühlsystem gekühlten Wand zu erreichen, ist vorgesehen, daß in dem Kondensatraum ein Hülsenteil angeordnet ist, das den Kondensatraum in einen radial inneren und äußeren, axial verlaufenden Strömungskanal unterteilt, wobei der innere und äußere Strömungskanal jeweils axial endseitig miteinander in Verbindung stehen.

Das Hülsenteil kann dabei vorteilhafterweise mit radial auswärts gerichteten, axial verlaufenden und gleichmäßig über den Umfang verteilt angeordneten Trennstegen versehen sein, die zwischen sich die äußeren Strömungskanäle bilden.

Um eine ausreichende Strömung zu erzielen, sieht die Erfindung vor, daß innerhalb des Hülsenteils am Rotor fest angeordnete Förderorgane für das Kondensat umlaufen und einen Förderdruck für die Zirkulation des Kondensats in den Strömungskanälen erzeugen. Diese Förderorgane können in bevorzugter Ausführungsform der Erfindung von einem auf der Mantelfläche des die Gleitringdichtung tragenden Lagerings angeordneten Fördergewinde gebildet sein.

Das Kühlsystem ist zweckmäßigerweise von einer den Kondensatraum umschließenden, von Kühlwasser durchströmten Ringkammer gebildet, die an den Kühlwasserkreislauf für die Gegenringkühlung des Gleitringlagers angeschlossen ist. Um einen besseren Wärmeübergang zu erzielen, ist die Ringkammer vorteilhafterweise mit in Richtung zum Kondensatraum sich erstreckenden Ringnuten versehen.

Um schließlich ein Abfließen des Kondensats durch eine oder mehrere der in Einbaulage des Dichtkopfes unten angeordneten Überströmkanäle zu verhindern, empfiehlt es sich, daß die Überströmkanäle durch radial in das Dichtkopfgehäuse wahlweise einsetzbare Nippel zu öffnen oder absperrbar sind, wobei nur der in Einbaulage vertikal oberste Überströmkanal geöffnet ist.

Im folgenden wird die Erfindung an einem in der Zeichnung dargestellten Ausführungsbeispiel näher erläutert; es zeigen:
- Fig. 1: den Dichtkopf nach der Erfindung im Axialschnitt,
- Fig. 2: eine nur teilweise Darstellung des Gegenstands nach Fig. 1,

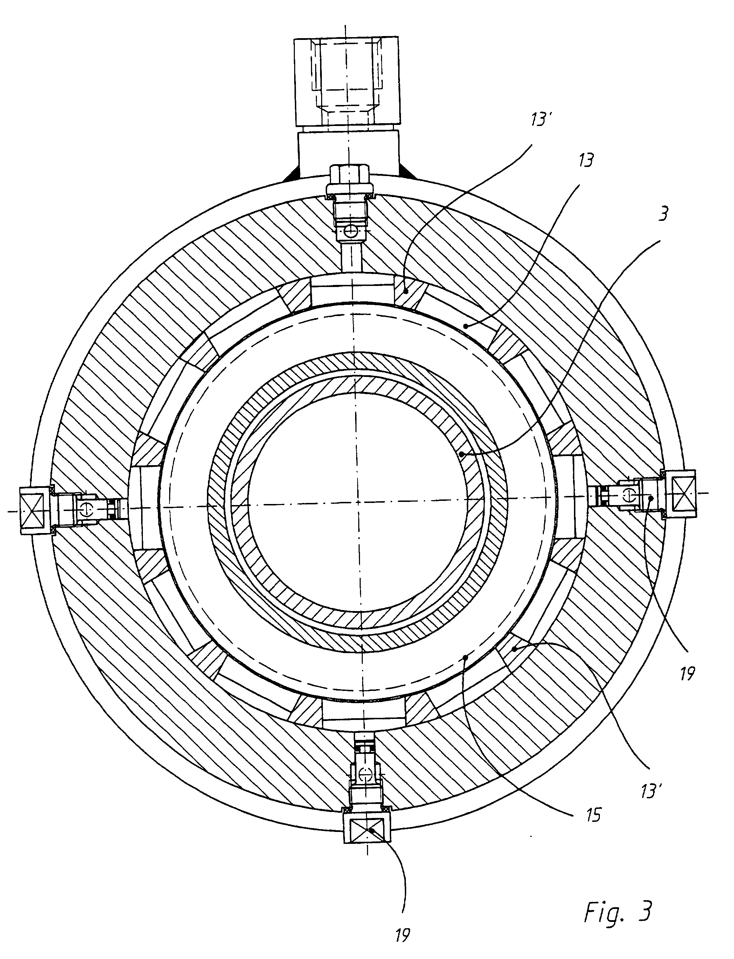

- Fig. 3: den Gegenstand nach Fig. 1 im Querschnitt,
- Fig. 4: das Hülsenteil in Stirnansicht und
- Fig. 5: das Hülsenteil im Querschnitt.

Der in der Zeichnung dargestellte Dichtkopf 1 dient zum Zuführen eines Wärmeträgermediums insbesondere in Form von Dampf zu einem rotierenden Drucksystem 2, beispielsweise einer Trockentrommel, Heizwalze oder dergleichen, das in der Zeichnung nur mit seiner Anschlußeinrichtung angedeutet ist.

Dazu besteht der Dichtkopf 1 aus einem an das Drucksystem 2 angeschlossenen rohrförmigen Rotor 3 und einem über Wälzlager 4 auf dem Rotor 3 angeordneten stillstehenden Dichtkopfgehäuse 5. Das Dichtkopfgehäuse 5 besitzt mindestens einen Anschlußstutzen 5' für eine das Wärmeträgermedium führende, in der Zeichnung nicht dargestellte Anschlußleitung.

Der Rotor 3 steht über den vom Wärmeträgermedium beaufschlagten Innenraum 8 des Dichtkopfgehäuses 5 in offener Verbindung mit dem Anschlußstutzen 5'. Dadurch kann das Wärmeträgermedium durch den Anschlußstutzen 5' und den Rotor 3 in das Drucksystem 2 gelangen.

Axial zwischen dem Anschlußstutzen 5' und den Wälzlagern 4 ist ein den Rotor 3 gegen die Wand des Dichtkopfgehäuses 5 abdichtendes primäres Dichtungselement 6 angeordnet, dem axial in Richtung zu den Wälzlagern 4 hin atmosphärenseitig eine sekundäre Dichtung 7 zwischen dem Rotor 3 und der Wand des Dichtkopfgehäuses 5 nachgeschaltet ist.

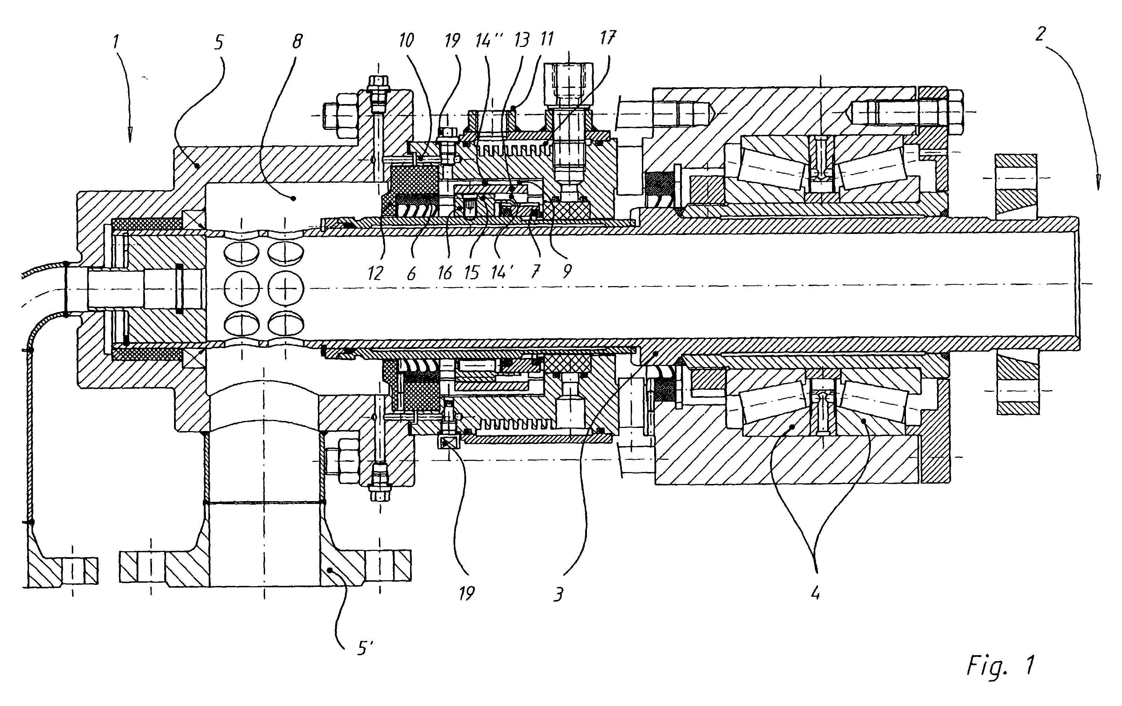

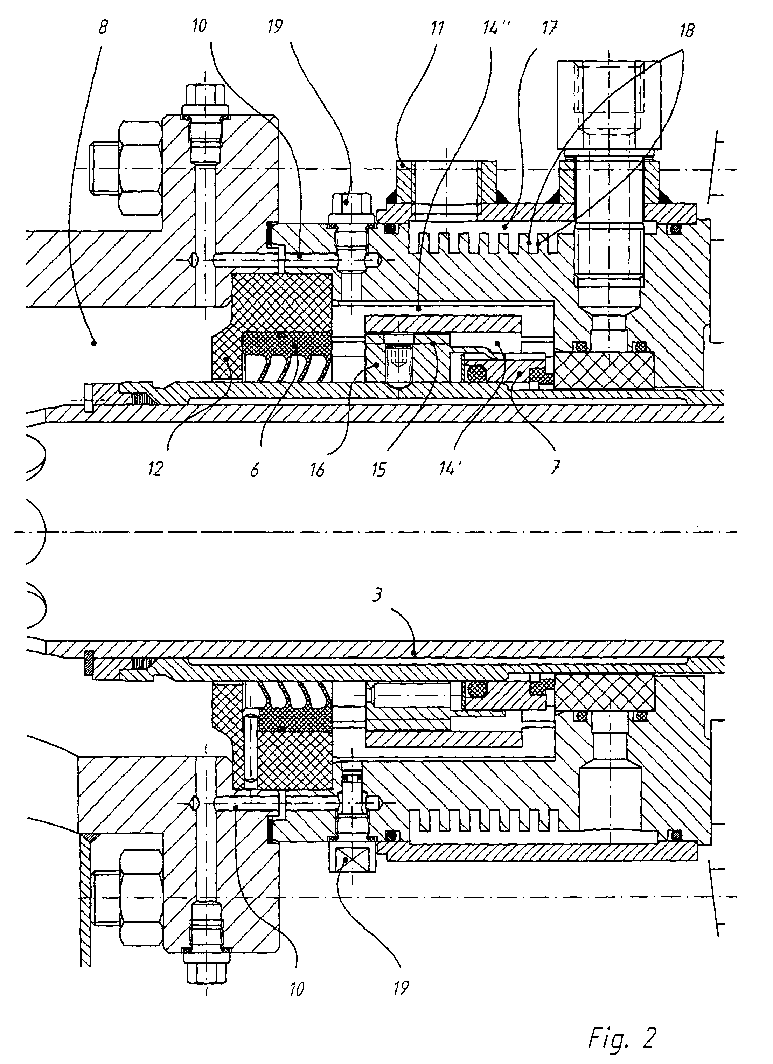

Im Dichtkopfgehäuse 5 ist axial zwischen der sekundären Dichtung 7 und dem primären Dichtungselement 6 ein sich ringförmig um den Rotor 3 erstreckender Kondensatraum 9 angeordnet. Der Kondensatraum 9 steht über wenigstens einen, vorzugsweise über vier Überströmkanäle 10 mit dem Innenraum 8 in Verbindung. Außerdem befindet sich der Kondensatraum 9 in wärmeleitendem Kontakt mit einem Kühlsystem 11. Hierdurch kann das dampfförmige Wärmeträgermedium durch den Überströmkanal 10 in den Kondensatraum 9 eintreten und dort unter dem Einfluß des Kühlsystems 11 kondensieren. Das Kondensat, das damit auch in Kontakt mit dem primären Dichtungselement 6 kommt, verhindert ein Trockenlaufen dieses Dichtungselementes 6, wirkt also als Schmiermittel. Da der Kondensatraum 9 in Verbindung mit dem Innenraum 8 des Dichtkopfgehäuses 5 steht, bestehen zwischen den axial beiden Seiten des primären Dichtungselementes 6 keine Druckunterschiede, so daß jedenfalls keine axiale Kraftbeaufschlagung vorliegt. Dadurch kann das primäre Dichtungselement 6 als Ringlippendichtung ausgebildet sein, wobei, wie sich dies auch aus den Fig. 1 und 2 ergibt, die Ringlippendichtung zweckmäßigerweise aus mehreren, axial hintereinander angeordneten Ringlippen aufgebaut ist. Die sekundäre Dichtung 7 ist dagegen als übliche Gleitringdichtung ausgebildet.

Das primäre Dichtungselement 6 ist auf seiner dem Innenraum 8 zugewandten Seite von einer Isolierscheibe 12 umschlossen, die einen Wärmefluß vom Innenraum 8 her zum Kondensatraum 9 verhindert. Das Dichtungselement 6 ist dabei in einen Ringfalz der Isolierscheibe 12 eingelegt.

Um weiter einen Wärmefluß vom Innern des Rotors 3 her zum Kondensatraum 9 zu mindern, ist der Rotor 3 in dem sich über die beiden Dichtungen 6, 7 erstreckenden Bereich doppelwandig ausgebildet.

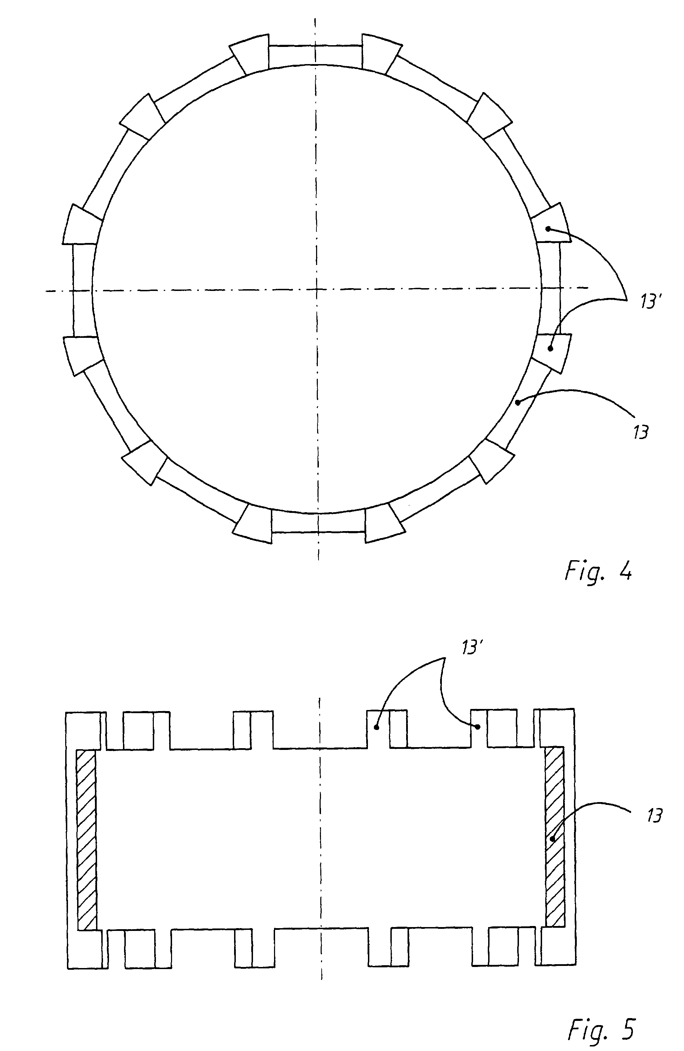

In dem Kondensatraum 9 ist ein in den Fig. 4 und 5 im einzelnen dargestelltes Hülsenteil 13 angeordnet, das den Kondensatraum 9 in einen radial inneren 14' und äußeren 14", jeweils axial verlaufenden Strömungskanal unterteilt. Der innere und äußere Strömungskanal 14', 14" stehen dabei jeweils axial endseitig miteinander in Verbindung. Dadurch ist grundsätzlich eine umlaufende Strömung möglich. Das Hülsenteil 13 ist mit radial auswärts gerichteten, axial verlaufenden und gleichmäßig über den Umfang verteilt angeordneten Trennstegen 13' versehen. Diese bilden zwischen sich an der äußeren Umfangsfläche die äußeren Strömungskanäle 14". Innerhalb des Hülsenteils 13 sind am Rotor 3 fest angeordnete Förderorgane für das Kondensat vorgesehen, die mit dem Rotor 3 umlaufen und einen Förderdruck für die Zirkulation des Kondensats in den Strömungskanälen 14', 14" erzeugen. Diese Förderorgane sind von einem Fördergewinde gebildet, das in der Fig. 1 in üblicher Darstellung lediglich als Strich 15 angedeutet ist, wobei das Fördergewinde auf der Mantelfläche des die Gleitringdichtung 7 tragenden Lagerings 16 angeordnet ist.

Das Kühlsystem 11 ist von einer den Kondensatraum 9 umschließenden Ringkammer 17 gebildet, die von Kühlwasser durchströmt wird. Diese Ringkammer 17 ist mit an den Kühlwasserkreislauf angeschlossen, der der Gegenringkühlung des Gleitringlagers 7 dient. Diese Ringkammer kann dabei, wie in der Zeichnung in Fig. 2 dargestellt, mit in Richtung zum Kondensatraum 9 sich erstreckenden Ringnuten 18 versehen sein, wodurch die innere Oberfläche vergrößert, somit eine bessere Kühlwirkung erzielt wird.

Um zu verhindern, daß das Kondensat durch einen der unteren Überströmkanäle 10 zurück in den Innenraum 8 des Dichtkopfgehäuses 5 fließen kann, sind die Überströmkanäle 10 durch radial in das Dichtkopfgehäuse 5 wahlweise einsetzbare, entsprechend unterschiedlich ausgebildete Nippel 19 zu öffnen oder abzusperren. Das Einsetzen der Nippel 19 erfolgt daher erst nach endgültiger Montage des Dichtkopfes 1 in der Weise, daß nur der in Einbaulage vertikal oberste Überströmkanal 10 geöffnet, die übrigen dagegen geschlossen sind.

## Patentansprüche

1. Dichtkopf zum Transport eines Wärmeträgermediums in Form von Dampf zu einem rotierenden Drucksystem (2), wie einer Trockentrommel, Heizwalze oder dergleichen, und anschließendem Abführen des Kondensats, bestehend aus einem an das Drucksystem (2) angeschlossenen rohrförmigen Rotor (3) und einem über Wälzlager (4) auf dem Rotor (3) angeordneten stillstehenden Dichtkopfgehäuse (5) mit mindestens einem Anschlußstutzen (5') für eine das Wärmeträgermedium führende Anschlußleitung, wobei der Rotor (3) über den vom Wärmeträgermedium beaufschlagten Innenraum (8) des Dichtkopfgehäuses (5) in offener Verbindung mit dem Anschlußstutzen (5') steht und axial zwischen dem Anschlußstutzen (5') und den Wälzlagern (4) ein den Rotor (3) gegen die Wand des Dichtkopfgehäuses (5) abdichtendes primäres Dichtungselement (6) angeordnet ist, dem axial in Richtung zu den Wälzlagern (4) hin eine zur Atmosphäre dichtende, sekundäre Dichtung (7) zwischen dem Rotor (3) und der Wand des Dichtkopfgehäuses (5) nachgeschaltet ist, und im Dichtkopfgehäuse (5) axial zwischen der sekundären Dichtung (7) und dem primären Dichtungselement (6) ein sich ringförmig um den Rotor (3) erstreckender Raum angeordnet ist, **dadurch gekennzeichnet, daß** der Raum zwischen dem primären Dichtungselement (6) und der sekundären Dichtung (7) ein Kondensatraum (9) ist, der in wärmeleitendem Kontakt mit einem Kühlsystem (11) und der über wenigstens einen Überströmkanal (10) mit dem vom Wärmeträgermedium beaufschlagten Innenraum (8) in Verbindung steht.

2. Dichtkopf nach Anspruch 1, **dadurch gekennzeichnet, daß** das primäre Dichtungselement (6) als Ringlippendichtung oder als Gleitringdichtung und die sekundäre Dichtung (7) als Gleitringdichtung ausgebildet sind.

3. Dichtkopf nach Anspruch 2, **dadurch gekennzeichnet, daß** die Ringlippendichtung mehrere, axial hintereinander angeordnete Ringlippen aufweist.

4. Dichtkopf nach einem der Ansprüche 1 bis 3, **dadurch gekennzeichnet, daß** das primäre Dichtungselement (6) auf seiner dem Innenraum (8) zugewandten Seite von einer Isolierscheibe (12) umschlossen ist.

5. Dichtkopf nach Anspruch 4, **dadurch gekennzeichnet, daß** das Dichtungselement (6) in einen Ringfalz der Isolierscheibe (12) eingelegt ist.

6. Dichtkopf nach einem der Ansprüche 1 bis 5, **dadurch gekennzeichnet, daß** der Rotor (3) in dem sich über die beiden Dichtungen (6, 7) erstreckenden Bereich doppelwandig ausgebildet ist.

7. Dichtkopf nach einem der Ansprüche 1 bis 6, **dadurch gekennzeichnet, daß** in dem Kondensatraum (9) ein Hülsenteil (13) angeordnet ist, das den Kondensatraum (9) in einen radial inneren (14') und äußeren (14"), axial verlaufenden Strömungskanal unterteilt, wobei der innere und äußere Strömungskanal (14', 14") jeweils axial endseitig miteinander in Verbindung stehen.

8. Dichtkopf nach Anspruch 7, **dadurch gekennzeichnet, daß** das Hülsenteil (13) mit radial auswärts gerichteten, axial verlaufenden und gleichmäßig über den Umfang verteilt angeordneten Trennstegen (13') versehen ist, die zwischen sich die äußeren Strömungskanäle (14") bilden.

9. Dichtkopf nach Anspruch 7 oder 8, **dadurch gekennzeichnet, daß** innerhalb des Hülsenteils (13) am Rotor (3) fest angeordnete Förderorgane für das Kondensat umlaufen und einen Förderdruck für die Zirkulation des Kondensats in den Strömungskanälen (14', 14") erzeugen.

10. Dichtkopf nach Anspruch 9, **dadurch gekennzeichnet, daß** die Förderorgane von einem auf der Mantelfläche des die Gleitringdichtung (7) tragenden Lagerrings (16) angeordneten Fördergewinde (15) gebildet sind.

11. Dichtkopf nach einem der Ansprüche 1 bis 10, **dadurch gekennzeichnet, daß** das Kühlsystem (11) von einer den Kondensatraum (9) umschließenden, von Kühlwasser durchströmten Ringkammer (17) gebildet ist, die an den Kühlwasserkreislauf für die Gegenringkühlung des Gleitringlagers (7) angeschlossen ist.

12. Dichtkopf nach Anspruch 11, **dadurch gekennzeichnet, daß** die Ringkammer (17) mit in Richtung zum Kondensatraum (9) sich erstreckenden Ringnuten (18) versehen ist.

13. Dichtkopf nach einem der Ansprüche 1 bis 12, **dadurch gekennzeichnet, daß** die Überströmkanäle (10) durch radial in das Dichtkopfgehäuse (5) wahlweise einsetzbare Nippel (19) zu öffnen oder absperrbar sind, wobei nur der in Einbaulage vertikal oberste Überströmkanal (10) geöffnet ist.

## Claims

1. Sealing head for conveying a heat transfer medium in the form of steam to a rotating pressure system (2) such as a drying drum, heating roll or the like, subsequently carrying away the condensate, comprising a tubular rotor (3) linked to the pressure system (2) and a stationary sealing head casing (5) arranged on the rotor (3) via rolling bearings (4), with at least one connection fitting (5') for a connecting pipe to carry the heat transfer medium, the rotor (3) communicating openly with the connection fitting (5') via the interior (8) of the sealing head's casing (5) (said interior (8) being acted upon by the heat transfer medium), and disposed axially between the connection fitting (5') and the rolling bearings (4) is a primary sealing element (6) which seals the rotor (3) with respect to the wall of the sealing head's casing (5), arranged axially downstream of which in the direction of the rolling bearings (4), and between the rotor (3) and the wall of the sealing head's casing (5), is a secondary seal (7) for sealing it off from the atmosphere, and arranged in the sealing head's casing (5), axially between the secondary seal (7) and the primary sealing element (6), is a compartment extending annularly around the rotor (3), **characterised in that** the compartment between the primary sealing element (6) and the secondary seal (7) is a condensate compartment (9) which is in thermally conductive contact with a cooling system (11) and which communicates via at least one overflow channel (10) with the interior (8) charged with the heat transfer medium.

2. Sealing head according to claim 1, **characterised in that** the primary sealing element (6) is configured as an annular lip seal or rotating mechanical seal and the secondary seal (7) as a rotating mechanical seal.

3. Sealing head according to claim 2, **characterised in that** the annular lip seal features a plurality of annular lips arranged axially one behind the other.

4. Sealing head according to any of claims 1 to 3, **characterised in that** on its side facing the interior (8) the primary sealing element (6) is surrounded by an insulating panel (12).

5. Sealing element according to claim 4, **characterised in that** the sealing element (6) is inserted into an annular rebate in the insulating panel (12).

6. Sealing element according to any of claims 1 to 5, **characterised in that** the rotor (3) is a double-walled construction in the area extending past the two seals (6, 7).

7. Sealing head according to any of claims 1 to 6, **characterised in that** arranged in the condensate compartment (9) is a sleeve member (13) which divides the condensate compartment (9) into a radially inner (14') and outer (14") axially extending flow channel, with the inner and outer flow channels (14', 14") in each case communicating axially with each other at the ends.

8. Sealing head according to claim 7, **characterised in that** the sleeve member (13) is provided with radially outward-facing, axially extending partitioning lands (13') which are spaced evenly around the circumference and which between them form the outer flow channels (14").

9. Sealing head according to claim 7 or 8, **characterised in that** fixedly arranged transfer units for the condensate circulate on the rotor (3) within the sleeve member (13) and generate a conveying pressure for circulation of the condensate in the flow channels (14', 14").

10. Sealing head according to claim 9, **characterised in that** the conveyor units are constituted by a conveying thread (15) arranged on the generating surface of the bearing ring (16) carrying the rotating mechanical seal (7).

11. Sealing head according to any of claims 1 to 10, **characterised in that** the cooling system (11) is formed by an annular chamber (17) which surrounds the condensate compartment (9) and through which cooling water flows, which is connected up to the coolant circuit for cooling the mating ring of the rotating mechanical seal (7).

12. Sealing head according to claim 11, **characterised in that** the annular chamber (17) is provided with annular slots (18) which extend towards the condensate compartment (9).

13. Sealing head according to any of claims 1 to 12, **characterised in that** the overflow channels (10) are are adapted to be opened or closed by nipples (19) which can be inserted into the sealing head's casing (5) as needed, with only the overflow channel (10) that is vertically uppermost in the installed position being open.

## Revendications

1. Joint tournant pour le transfert d'un fluide caloporteur sous forme de vapeur dans un système sous pression (2) rotatif, tel qu'un cylindre de séchage, un cylindre de chauffage ou similaire, et l'évacuation consécutive du condensat, comprenant un rotor (3) tubulaire relié au système sous pression (2) et un corps (5) de joint tournant, qui est monté stationnaire sur le rotor (3) par l'intermédiaire d'un palier à roulement (4) et présente au moins une pièce de raccord (5') pour une conduite de liaison transportant le fluide caloporteur, le rotor (3) communiquant librement avec la pièce de raccord (5') via la chambre intérieure (8) du corps (5) de joint tournant, alimentée en fluide caloporteur, un élément d'étanchéité (6) primaire, qui assure l'étanchéité entre le rotor (5) et la paroi du corps (5) de joint tournant, étant disposé axialement entre la pièce de raccord (5') et le palier à roulement (4), un joint secondaire (7) qui assure l'étanchéité avec l'atmosphère étant disposé à la suite de celui-ci dans la direction axiale, entre le rotor (3) et la paroi du corps (5) de joint tournant, et une chambre, qui s'étend en anneau autour du rotor (3), étant disposée dans le corps (5) de joint tournant, axialement entre le joint secondaire (7) et l'élément d'étanchéité primaire (6), **caractérisé en ce que** la chambre entre l'élément d'étanchéité primaire (6) et le joint secondaire (7) est une chambre à condensat (9) qui est en contact conducteur de chaleur avec un système de refroidissement (11) et communique via au moins un canal d'écoulement (10) avec la chambre intérieure (8) alimentée en fluide caloporteur.

2. Joint tournant selon la revendication 1, **caractérisé en ce que** l'élément d'étanchéité (6) primaire est conformé en joint annulaire à lèvres ou en garniture d'étanchéité à joint glissant et le joint secondaire (7) est conformé en garniture d'étanchéité à joint glissant.

3. Joint tournant selon la revendication 2, **caractérisé en ce que** le joint annulaire à lèvres présente plusieurs lèvres annulaires disposées l'une derrière l'autre dans la direction axiale.

4. Joint tournant selon une des revendications 1 à 3, **caractérisé en ce que** l'élément d'étanchéité (6) primaire, du côté tourné vers la chambre intérieure (8), est entouré d'une bague isolante (12).

5. Joint tournant selon la revendication 4, **caractérisé en ce que** l'élément d'étanchéité (6) primaire est monté dans une feuillure annulaire de la bague isolante (12).

6. Joint tournant selon une des revendications 1 à 5, **caractérisé en ce que** le rotor (3) dans la zone qui comprend les deux joints (6, 7), est à double paroi.

7. Joint tournant selon une des revendications 1 à 6, **caractérisé en ce qu'**une pièce en forme de manchon (13) est disposée dans la chambre à condensat (9) et divise ladite chambre à condensat (9) en un canal d'écoulement intérieur (14') et un canal d'écoulement extérieur (14"), les canaux d'écoulement intérieur et extérieur (14', 14") communiquant l'un avec l'autre, chacun au niveau de son extrémité axiale.

8. Joint tournant selon la revendication 7, **caractérisé en ce que** la - pièce en forme de manchon (13) est pourvue de cloisons (13') orientées radialement vers l'extérieur, qui s'étendent dans la direction axiale, sont réparties régulièrement sur le pourtour et forment entre elles les canaux d'écoulement extérieurs (14").

9. Joint tournant selon la revendication 7 ou 8, **caractérisé en ce qu'**à l'intérieur de la pièce en forme de manchon (13), des organes de transport pour le condensat, solidaires du rotor (3), sont animés d'un mouvement de rotation et produisent une pression de refoulement pour la circulation du condensat dans les canaux d'écoulement (14', 14").

10. Joint tournant selon la revendication 9, **caractérisé en ce que** les organes de transport sont formés d'un filet transporteur (15) aménagé sur la surface extérieure de la bague de roulement (16) portant la garniture d'étanchéité à joint glissant (7).

11. Joint tournant selon une des revendications 1 à 10, **caractérisé en ce que** le système de refroidissement (11) est formé d'une chambre annulaire (17) balayée par de l'eau de refroidissement qui entoure la chambre à condensat (9) et est connectée au circuit d'eau de refroidissement pour le refroidissement de la bague d'appui du palier (7) à coussinet lisse.

12. Joint tournant selon la revendication 11, **caractérisé en ce que** la chambre annulaire (17) est pourvue de gorges annulaires (18) qui s'étendent en direction de la chambre à condensat (9).

13. Joint tournant selon une des revendications 1 à 12, **caractérisé en ce que** les canaux d'écoulement (10) peuvent être ouverts ou fermés au moyen de bouchons (19) insérés de manière sélective, radialement, dans le corps de joint tournant (5), seul le canal d'écoulement (10) le plus haut dans la position de montage verticale étant ouvert.
